# EUROPÄISCHE PATENTSCHRIFT

(11) **EP 2 886 309 B1**
(45) Veröffentlichungstag und Bekanntmachung des Hinweises auf die Patenterteilung: **15.08.2018**
(21) Anmeldenummer: 14187889.2
(22) Anmeldetag: 07.10.2014
(51) Int. Cl.: B29C 70/38

(54) **Vorrichtung zum Legen von Faserbändern**
Device for the laying down of fibre slivers
Dispositif de pose de bandes de fibre

(30) Priorität: 16.12.2013 AT 508322013
(43) Veröffentlichungstag der Anmeldung: 24.06.2015
(73) Patentinhaber: GFM - GmbH, 4400 Steyr (AT)
(72) Erfinder: Dietachmayr, Harald, 4522 Sierning (AT)
(74) Vertreter: Patentanwaltskanzlei Hübscher

(56) Entgegenhaltungen:
- EP-B1- 0 371 289
- DE-A1- 2 753 272
- US-A- 5 454 897
- US-A1- 2007 044 922

## Beschreibung

Die Erfindung bezieht sich auf eine Vorrichtung zum Legen von Faserbändern mit einer Umlenkführung für die Faserbänder aus senkrecht zur Umlenkachse nebeneinandergereihten, in Andrückrichtung federnd abgestützten Druckrollen zur Bandumlenkung und mit einem in Legerichtung verlagerbaren Gestell zur Aufnahme der Druckrollen.

Zum Herstellen von Fasergelegen werden üblicherweise Legeköpfe mit einer Umlenkführung für die Faserbänder eingesetzt, die mit Hilfe von diese Umlenkführung bildenden, nebeneinandergereihten Drucklamellen an die bereits gelegten Faserlagen angedrückt werden. Die Faserbänder, die ein eine Faserschicht tragendes Klebeband umfassen, werden von einer Vorratsrolle im Ausmaß der Vorschubbewegung des Legekopfs abgezogen und der Umlenkführung zugeführt, um einerseits die Faserschicht an die bereits gelegten Faserlagen anzudrücken und anderseits das Klebeband von der Faserschicht abzuziehen, was einen vergleichsweise kleinen Umlenkradius erfordert. Da die einzelnen Faserlagen des Geleges ohne Lufteinschlüsse dicht aufeinandergelegt werden sollen, ist für eine entsprechende Druckbeaufschlagung der Faserbänder durch die Umlenkführung zu sorgen. Zu diesem Zweck ist es bekannt (EP 0 371 289 B1), die zu einem Paket nebeneinandergereihten Drucklamellen voneinander unabhängig in Andrückrichtung verschiebbar in einem Gestell zu lagern und über eine Membran mit einem Druckmittel zu beaufschlagen, sodass aufgrund der Flexibilität der Membran die einzelnen Drucklamellen auch einem ungleichmäßigen Verlauf der bereits gelegten Faserlagen folgen können.

Um die beim Andrücken der Faserbänder an die bereits gelegten Faserlagen zwischen den Drucklamellen und dem Klebeband der Faserbänder entstehende Reibung zu verringern, ist es darüber hinaus bekannt (US 4 351 688 A, US 2007/044 922 A1), die Drucklamellen durch Druckringe zu ersetzen, die auf in Andrückrichtung verschiebbar geführten Lagerscheiben drehbar gelagert sind.

Unabhängig davon, ob die auf den federnd abgestützten Lagerscheiben gelagerten Druckringe je für sich über Druckrollen beaufschlagt werden (US 4 351 688 A) oder ob sich die Lagerscheiben auf Druckzylindern abstützen (US 2007/044922 A1), haben diese Druckringe den Nachteil, dass die verschiebbare Lagerung ihrer Lagerscheiben vergleichsweise große Durchmesser der Druckringe bedingt, was sich nicht nur auf den auf das Faserband ausübbaren Anpressdruck, sondern auch auf das Abziehen des Klebebands von der Faserschicht der Faserbänder nachteilig auswirkt.

Der Erfindung liegt somit die Aufgabe zugrunde, bei einer Vorrichtung zum Legen von Faserbändern eine Umlenkführung für die Faserbänder zu schaffen, die unter vorteilhaften Reibungsbedingungen einerseits eine gute Anpressung der Faserbänder an die bereits gelegten Faserlagen und anderseits ein sicheres Abziehen des Klebebands von der Faserschicht erlaubt, ohne Gefahr zu laufen, dass beim Abziehen des Klebebands die Faserschicht wieder teilweise vom Gelege abgehoben wird.

Ausgehend von einer Vorrichtung der eingangs geschilderten Art löst die Erfindung die gestellte Aufgabe dadurch, dass die Druckrollen in umfangsseitige Lageraufnahmen eingreifende, aneinander und zwischen seitlichen Führungsanschlägen axial geführte Rillenscheiben bilden, die mit Hilfe von elastischen Endloszügen, die um eine in seitlichen Halterungen gelagerte Lagerrolle geführt sind, im Lagereingriff mit den Lageraufnahmen gehalten sind, und dass sich die Lageraufnahmen voneinander unabhängig in Andrückrichtung federnd an einem zwischen den seitlichen Halterungen vorgesehenen Widerlager abstützen.

Durch das Vorsehen von Rillenscheiben, die mit Hilfe von elastischen Endloszügen in Lageraufnahmen gehalten werden, die diese Rillenscheiben über einen Umfangsabschnitt führen, erübrigt sich eine Lagerung der Rillenscheiben auf einer Achse, sodass auch keine Lager für solche Achsen erforderlich werden. Damit sind die konstruktiven Voraussetzungen geschaffen, den Durchmesser der Rillenscheiben unabhängig von einer die Rillenscheiben aufnehmenden Achse wählen zu können. Trotzdem bleibt die Möglichkeit der federnden Abstützung in Andrückrichtung gewahrt, weil ja die Lageraufnahmen selbst voneinander unabhängig in Andrückrichtung federnd an einem Widerlager abgestützt werden, das zwischen seitlichen Halterungen vorgesehen ist. Neben der radialen Führung der Rillenscheiben über die Lageraufnahmen ist allerdings noch für eine entsprechende axiale Führung zu sorgen. Aus diesem Grunde werden die aneinander seitlich geführten Rillenscheiben zwischen seitlichen Führungsanschlägen aufgenommen, die die axiale Lage der Rillenscheiben festlegen, ohne deren radiale Verlagerung zu unterbinden. Die elastischen Endloszüge, mit denen die Brillenscheiben individuell im Lagereingriff mit den Lageraufnahmen gehalten werden, müssen ein ausreichendes Dehnungsverhalten aufweisen, um die Verlagerung der Rillenscheiben im Rahmen der Vorspannung der federnden Abstützung der Lageraufnahmen gewährleisten zu können. Die erfindungsgemäße Vorrichtung besitzt somit eine Umlenkführung für die Faserbänder, die Vorteile von Druckrollen nützt, ohne deren Nachteile in Kauf nehmen zu müssen.

Besonders vorteilhafte Führungsbedingungen ergeben sich für die Rillenscheiben, wenn die Lageraufnahmen in die Rillenscheiben eingreifende Wälzkörper aufweisen, weil in diesem Fall über die Wälzkörper eine axiale Führungskomponente auf die Rillenscheiben aufgebracht werden kann.

Die seitlichen Führungsanschläge für die Rillenscheiben können auch zum Andrücken des Faserbands an die bereits gelegten Faserlagen herangezogen werden, wenn die Rillenscheiben zu einzelnen Druckelementen zwischen Drucklamellen zusammengefasst sind, die eine entsprechend den Rillenscheiben gekrümmte Gleitfläche zur Bandumlenkung aufweisen und die seitlichen Führungsanschläge bilden, wobei die seitlich an den Druckelementen angeordneten Halterungen in Andrückrichtung verschiebbar in Ausnehmungen der Drucklamellen eingreifen. Diese Ausnehmungen in den Drucklamellen sind erforderlich, um einerseits die Drucklamellen unmittelbar axial an die aus den einzelnen Rillenscheiben gebildeten Druckelemente anschließen zu können und anderseits eine gegenseitige Verschiebung der Drucklamellen und der Druckelemente in Andrückrichtung sicherzustellen. Um insbesondere dickere Faserbänder gut an das bereits gelegte Fasergelege andrücken zu legen, können die Druckelemente und die Drucklamellen in einem Gestell in Andrückrichtung verschiebbar gelagert sein, um die Druckelemente und die Drucklamellen voneinander unabhängig über eine gemeinsame Membran mit einem Druckmittel beaufschlagen zu können.

Bilden die Drucklamellen in Andrückrichtung federnde, durch die Ausnehmungen vom übrigen Lamellenkörper gesonderte Gleitschuhe, so kann auf eine individuelle Beaufschlagung der einzelnen Druckelemente und Drucklamellen verzichtet werden, weil aufgrund der möglichen, der federnden Vorspannung der Rillenscheiben vergleichbaren federnden Vorspannung der Gleitschuhe die Gleitschuhe im Rahmen ihrer federelastischen Vorspannung dem Oberflächenverlauf der bereits gelegten Faserlagen folgen können, ohne die Drucklamelle selbst verlagern zu müssen.

Um eine an die Rillenscheiben angeglichene feinstufige Unterteilung der Gleitschuhe der Drucklamellen zu erhalten, können die Gleitschuhe in zur Lamellenebene parallele, voneinander unabhängig federnde Gleitsegmente unterteilt sein.

In der Zeichnung ist der Erfindungsgegenstand beispielsweise dargestellt. Es zeigen
- Fig. 1: eine erfindungsgemäße Vorrichtung zum Legen von Faserbändern ausschnittsweise im Bereich der Umlenkführung für die Faserbänder in einem vereinfachten Längsschnitt,
- Fig. 2: diese Vorrichtung in einem Schnitt nach der Linie II-II der Fig. 1 in einem größeren Maßstab,
- Fig. 3: eine der Fig. 1 entsprechende Darstellung einer Konstruktionsvariante einer erfindungsgemäßen Vorrichtung und
- Fig. 4: einen Schnitt nach der Linie V-V der Fig. 3 in einem größeren Maßstab.

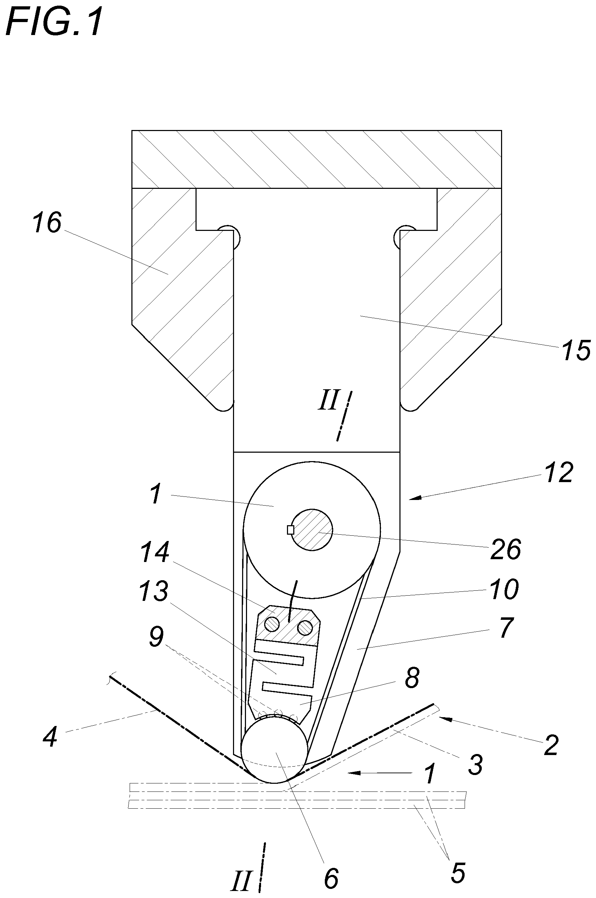

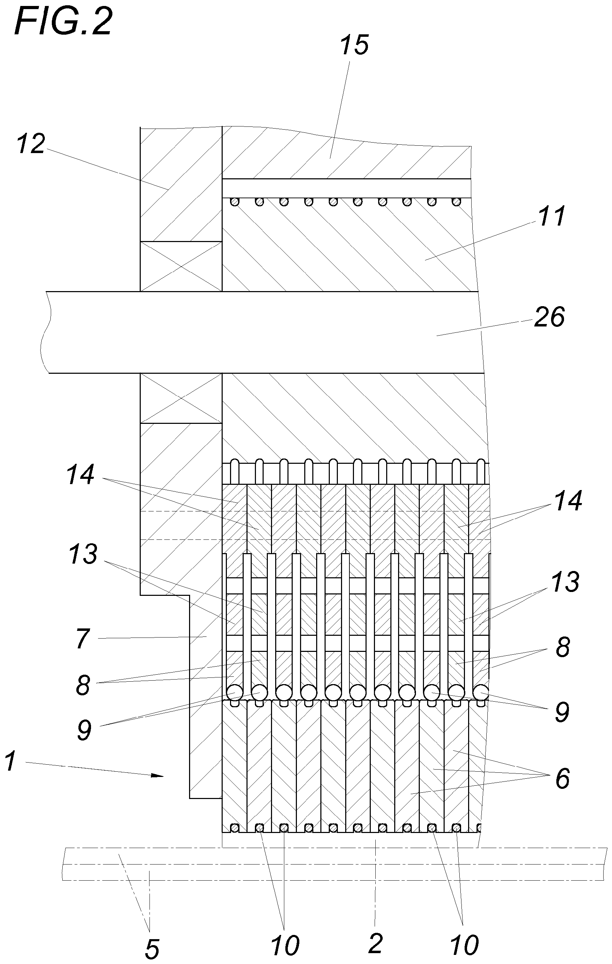

Gemäß dem Ausführungsbeispiel nach den Fig. 1 und 2 weist die Vorrichtung einen Legekopf mit einer Umlenkführung 1 für Faserbänder 2 auf, die ein eine Faserschicht 3 tragendes Klebeband 4 umfassen. Diese Faserbänder 2 werden von einer Vorratsrolle abgezogen und mit Hilfe der Umlenkführung 1 an die bereits gelegten Faserlagen 5 eines zu bildenden Fasergeleges angedrückt, wobei das Klebeband 4 von der Faserschicht 3 des Faserbands 2 abgezogen wird, und zwar mit einem vergleichsweise geringen Umlenkradius. Die Umlenkführung 1 setzt sich aus einer Mehrzahl von senkrecht zur Umlenkachse nebeneinandergereihten Druckrollen in Form von Riemenscheiben 6 zusammen, die aneinander anliegen und zwischen seitlichen Führungsanschlägen 7 axial geführt sind. Die Rillenscheiben 6 greifen in Lageraufnahmen 8 ein, die mit die Rillenscheiben 6 über deren Rillen führenden Wälzkörpern 9 versehen sind. Zur radialen Festlegung innerhalb der Lageraufnahmen 8 sind die Rillenscheiben 6 über einen elastischen Endloszug 10 gegenüber einer Lagerrolle 11 abgestützt, die in seitlichen, gemäß den Fig. 1 und 2 die Führungsanschläge bildenden Halterungen 12 gelagert ist, sodass die axial zwischen den Führungsanschlägen geführten Rillenscheiben 6 in radialer Richtung über die elastischen Endloszüge 10 und die Lagerrolle 11 im Eingriff mit den Lageraufnahmen 8 gehalten werden. Die Lageraufnahmen 8 selbst sind jeweils über Federelemente 13 in Andrückrichtung federnd an einem Widerlager 14 abgestützt, das zwischen den seitlichen Halterungen 12 angeordnet.

Da die seitlichen Halterungen 12 an einem Druckelement 15 befestigt sind und das Druckelement 15 gemäß der Fig. 1 in einem Gestell 16 verschiebefest eingespannt ist, werden bei einer Beaufschlagung des Gestells 16 mit einer entsprechenden Andrückkraft die Rillenscheiben 6 unter einer federnden Vorspannung der Federelemente 13 an die Faserlagen 5 angestellt, sodass das jeweilige um die Rillenscheiben 6 geführte Faserband 2 an die Faserlagen angedrückt wird, bevor das Klebeband 4 von der an die bereits gelegten Faserlagen 5 angedrückten Faserschicht 3 abgezogen wird. Die einzelnen Rillenscheiben 6 können daher im Rahmen der Vorspannung der ihnen zugeordneten Federelemente 13 voneinander unabhängig in Andrückrichtung verlagert werden, was eine feinstufige Anpassung der Umlenkführung 1 an den Oberflächenverlauf des bereits gelegten Fasergeleges erlaubt.

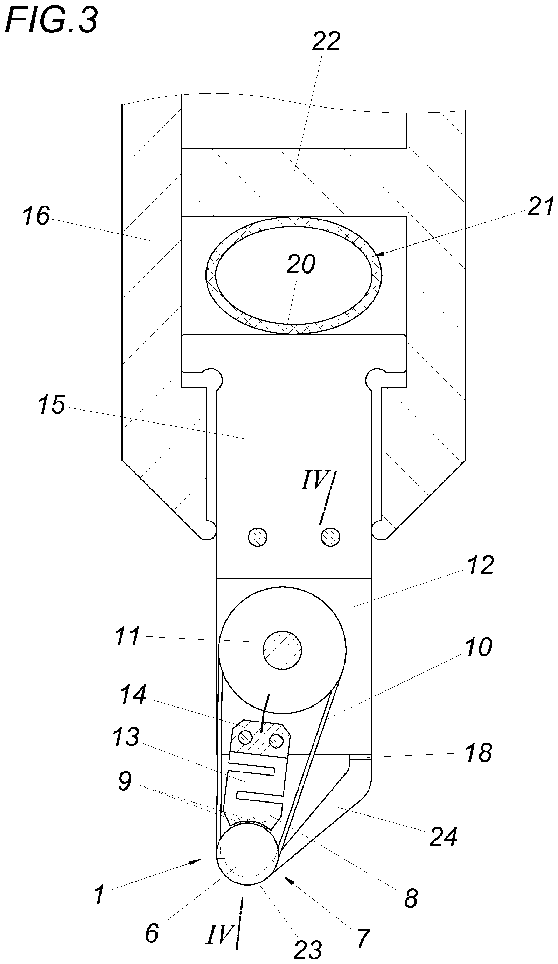

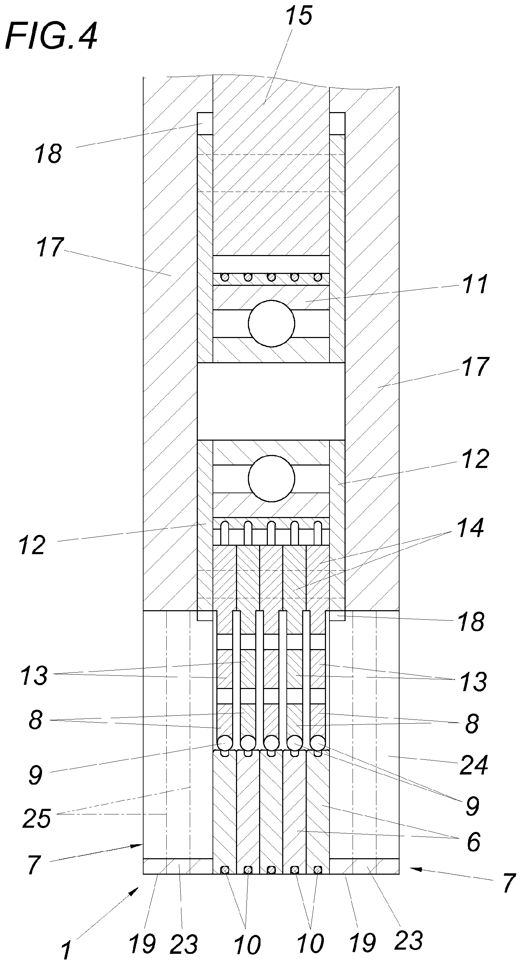

Zum Unterschied zu den Fig. 1 und 2 werden gemäß dem Ausführungsbeispiel nach den Fig. 3 und 4 die Führungsanschläge 7 nicht durch die seitlichen Halterungen 12, sondern durch gesonderter Drucklamellen 17 gebildet, die einzelne Druckelemente 15 mit Rillenscheiben 6 entsprechend den Fig. 1 und 2 zwischen sich in Andrückrichtung verschiebbar aufnehmen. Zu diesem Zweck sind die Drucklamellen 17 mit Ausnehmungen 18 versehen, in die die seitlichen Halterungen 12 mit einem entsprechenden Bewegungsspiel in Andrückrichtung eingreifen, sodass die seitlichen Halterungen 12 die axiale Führung der Rillenscheiben 6 zwischen den Drucklamellen 17 als Führungsanschläge 7 nicht beeinträchtigen können. Durch die Anordnung der Druckelemente 15 mit den Rillenscheiben 6 zwischen Drucklamellen 17 mit an die Rillenscheiben 6 angepassten Gleitflächen 19 für die Bandumlenkung können die Drucklamellen 17 und die Druckelemente 15 über eine gemeinsame Membran 20 voneinander unabhängig über ein Druckmittel beaufschlagt werden. Hierfür sind die Drucklamellen 17 und die Druckelemente 15 in Andrückrichtung verschiebbar im Gestell 16 zu lagern, wie dies der Fig. 3 entnommen werden kann, in der die Membran in Form eines Druckschlauchs 21 ausgebildet ist, der sich auf der den Drucklamellen 17 bzw. den Druckelementen 15 gegenüberliegenden Umfangsseite an einer Gestellwand 22 abstützt.

Eine solche individuelle Druckbeaufschlagung der Drucklamellen 17 ist jedoch nicht zwingend, wenn die Drucklamellen 17 einen die Gleitfläche 19 ergebenden Gleitschuh 23 bilden, der über einen federnden Steg 24 mit dem übrigen Lamellenkörper verbunden ist und daher in Andrückrichtung entsprechend den Rillenscheiben 6 mit einer federnden Vorspannung beaufschlagt werden kann. Damit kann auch der Gleitschuh 23, der zugleich als seitlicher Führungsanschlag 7 für die Rillenscheiben 6 dient, wie die Rillenscheiben 6 individuell dem Oberflächenverlauf der bereits gelegten Faserlagen 5 in Legerichtung nachgeführt werden, sodass sich unter Umständen eine gesonderte Druckbeaufschlagung der einzelnen Drucklamellen 17 und Druckelemente 15 erübrigt.

Die Gleitschuhe 23 der Drucklamellen 17 können durch zur Lamellenebene parallele Schlitze 25 in voneinander unabhängig federbelastete Gleitsegmente unterteilt werden, wie dies in der Fig. 4 strichpunktiert angedeutet ist. Damit wird auch im Bereich der Drucklamellen 17 eine der Gelegeoberfläche in Legerichtung folgende, den Rillenscheiben 6 vergleichbare, feinstufige Nachführung der Gleitschuhe 17 möglich.

Das Vorsehen drehbar gelagerter Rillenscheiben 6 vermindert den Reibungswiderstand zufolge der Bandumlenkung um die Umlenkführung 1. Zusätzlich kann dieser Reibungswiderstand verringert werden, wenn die Lagerrolle 11 für den elastischen Endloszug 10 gemäß der Fig. 1 über eine Welle 26 angetrieben wird, was einen entsprechenden Antrieb der Rillenscheiben über den Endloszug 10 mit sich bringt.

## Patentansprüche

1. Vorrichtung zum Legen von Faserbändern (2) mit einer Umlenkführung (1) für die Faserbänder (2) aus senkrecht zur Umlenkachse nebeneinandergereihten, in Andrückrichtung federnd abgestützten Druckrollen zur Bandumlenkung und mit einem in Legerichtung verlagerbaren Gestell (16) zur Aufnahme der Druckrollen, **dadurch gekennzeichnet, dass** die Druckrollen in umfangsseitige Lageraufnahmen (8) eingreifende, aneinander und zwischen seitlichen Führungsanschlägen (7) axial geführte Rillenscheiben (6) bilden, die mit Hilfe von elastischen Endloszügen (10), die um eine in seitlichen Halterungen (12) gelagerte Lagerrolle (11) geführt sind, im Lagereingriff mit den Lageraufnahmen (8) gehalten sind, und dass sich die Lageraufnahmen (8) voneinander unabhängig in Andrückrichtung federnd an einem zwischen den seitlichen Halterungen (12) vorgesehenen Widerlager (13) abstützen.

2. Vorrichtung nach Anspruch 1, **dadurch gekennzeichnet, dass** die Lageraufnahmen (8) in die Rillenscheiben (6) eingreifende Wälzkörper (9) aufweisen.

3. Vorrichtung nach Anspruch 1 oder 2, **dadurch gekennzeichnet, dass** die Rillenscheiben (6) zu einzelnen Druckelementen (15) zwischen Drucklamellen (17) zusammengefasst sind, die eine entsprechend den Rillenscheiben (6) gekrümmte Gleitfläche (19) zur Bandumlenkung aufweisen und die seitlichen Führungsanschläge (7) bilden, und dass die seitlich an den Druckelementen (15) angeordneten Halterungen (12) in Andrückrichtung verschiebbar in Ausnehmungen (18) der Drucklamellen (17) eingreifen.

4. Vorrichtung nach Anspruch 3, **dadurch gekennzeichnet, dass** die Drucklamellen (17) in Andrückrichtung federnde, vom übrigen Lamellenkörper durch federnde Stege (24) gesonderte Gleitschuhe (23) bilden.

5. Vorrichtung nach Anspruch 4, **dadurch gekennzeichnet, dass** die Gleitschuhe (23) der Drucklamellen (17) in zur Lamellenebene parallele, voneinander unabhängig federnde Gleitsegmente unterteilt sind.

6. Vorrichtung nach einem der Ansprüche 1 bis 5, **dadurch gekennzeichnet, dass** die Lagerrolle (11) für die Endloszüge 10 über eine Welle (26) antreibbar ist.

## Claims

1. Device for the laying down of fibre slivers (2), comprising a deflection guide (1) for the fibre slivers (2) formed from pressing rollers for sliver deflection which are disposed adjacent to one another perpendicularly to the deflection axis and are resiliently supported in the pressing direction, and comprising a frame (16), which is displaceable in the laying direction, for accommodating the pressing rollers, **characterised in that** the pressing rollers form grooved pulleys (6) which engage in circumferential bearing receivers (8), are axially guided against each other and between lateral guide stops (7) and are kept in bearing engagement with the bearing receivers (8) by means of elastic endless belts (10) which are guided about a bearing roller (11) mounted in lateral holders (12), and **in that** the bearing receivers (8) are resiliently supported independently of each other in the pressing direction on an abutment (13) provided between the lateral holders (12).

2. Device as claimed in claim 1, **characterised in that** the bearing receivers (8) comprise rolling bodies (9) engaging in the grooved pulleys (6).

3. Device as claimed in claim 1 or 2, **characterised in that** the grooved pulleys (6) are combined to form individual pressing elements (15) between pressing plates (17), which comprise a sliding surface (19) for belt deflection which is curved corresponding to the grooved pulleys (6), and form the lateral guide stops (7), and **in that** the holders (12) disposed laterally on the pressing elements (15) engage, so as to be displaceable in the pressing direction, in recesses (18) in the pressing plates (17).

4. Device as claimed in claim 3, **characterised in that** the pressing plates (17) form sliding shoes (23) which are resilient in the pressing direction and are separated from the rest of the plate body by resilient webs (24).

5. Device as claimed in claim 4, **characterised in that** the sliding shoes (23) of the pressing plates (17) are divided into sliding segments which are parallel to the plate plane and are resilient independently of each other.

6. Device as claimed in any one of claims 1 to 5, **characterised in that** the bearing roller (11) for the endless belts (10) can be driven via a shaft (26).

## Revendications

1. Dispositif servant à poser des bandes de fibres (2), avec un système de guidage de renvoi (1) pour les bandes de fibres (2) provenant de rouleaux de pression alignés les uns à côté des autres de manière perpendiculaire par rapport à l'axe de renvoi, soutenus sur ressorts dans la direction de compression, servant à renvoyer la bande et avec un châssis (16) pouvant être déplacé dans la direction de pose, servant à recevoir les rouleaux de pression, **caractérisé en ce que** les rouleaux de pression forment des poulies rainurées (6) venant en prise avec des logements formant paliers (8) situés côté périphérie, guidées axialement les unes contre les autres et entre des butées de guidage (7) latérales, qui sont maintenues en prise de portée avec les logements formant paliers (8) à l'aide de câbles sans fin (10) élastiques, qui sont guidés autour d'un rouleau formant palier (11) monté dans des fixations (12) latérales, et **en ce que** les logements formant paliers (8) se soutiennent, indépendamment les uns les autres, sur ressorts dans la direction de compression au niveau d'un contre-palier (13) prévu entre les fixations (12) latérales.

2. Dispositif selon la revendication 1, **caractérisé en ce que** les logements formant palier (8) comportent des corps de roulement (9) venant en prise dans les poulies rainurées (6).

3. Dispositif selon la revendication 1 ou 2, **caractérisé en ce que** les poulies rainurées (6) sont rassemblées en éléments de pression (15) individuels entre des plaques de pression (17) qui comportent une face de glissement (19) courbée en fonction des poulies rainurées (6) pour la déviation de la bande et qui forment les butées de guidage (7) latérales, et **en ce que** les fixations (12) disposées latéralement aux éléments de pression (15) viennent en prise dans la direction de pressage, de manière mobile, dans des évidements (18) des plaques de pression (17).

4. Dispositif selon la revendication 3, **caractérisé en ce que** les plaques de pression (17) forment, dans la direction de pressage, des patins glissants (23) flexibles, séparés des autres corps de plaque par des barrettes (24) flexibles.

5. Dispositif selon la revendication 4, **caractérisé en ce que** les patins glissants (23) des plaques de pression (17) sont divisés en segments coulissants flexibles, indépendants les uns des autres, parallèles par rapport au plan des plaques.

6. Dispositif selon l'une des revendications 1 à 5, **caractérisé en ce que** le rouleau formant palier (11) pour les câbles sans fin (10) peut être entrainé par le biais d'un arbre (26).
